# EUROPEAN PATENT SPECIFICATION

(11) **EP 1 520 485 B1**
(45) Date of publication and mention of the grant of the patent: **09.03.2011**
(21) Application number: 04077756.7
(22) Date of filing: 04.10.2004
(51) Int. Cl.: A23L 1/00, A23P 1/16, A23C 9/154, A23J 3/08

(54) **Method for stabilising and preparing an edible foam and compositions comprising such foam**
Verfahren zur Stabilisierung und Zubereitung von essbarem Schaum und essbaren Schaum enthaltende Zusammensetzungen
Procédé pour la stabilisation et la préparation d'une mousse alimentaire et des compositions contenant des mousses alimentaires

(30) Priority: 02.10.2003 NL 1024435; 02.10.2003 NL 1024434; 02.10.2003 NL 1024433; 02.10.2003 NL 1024438
(43) Date of publication of application: 06.04.2005
(73) Proprietor: Friesland Brands B.V., 3818 LE Amersfoort (NL)
(72) Inventor: Poortinga, Albert Thijs, 7331 AL Apeldoorn (NL); Wijnen, Maria Elisabeth, 7425 GS Deventer (NL); Koman-Boterblom, Hendrika, 7421 EZ Deventer (NL)
(74) Representative: Winckels, Johannes Hubertus F.

(56) References cited:
- EP-A- 0 274 348
- EP-A- 1 284 106
- WO-A-01/97638
- GB-A- 1 358 484
- NL-C- 1 018 770
- US-A- 4 718 433
- US-A- 5 342 635
- US-A- 5 925 394
- US-A- 6 099 878

## Description

The invention relates to a method for preparing a foam and in particular a stable foam. In addition, the invention concerns a stable foam as well as compositions, and in particular edible compositions, comprising such foam.

Over the last 10-15 years, a great need for "healthy" foods has grown. In particular products having a low fat content have become popular because of a positive contribution to health. These healthy foods, however, should not only be healthy, but also possess a pleasing taste and/or a pleasurable or agreeable mouthfeel.

The object of the present invention is to provide foods and foodstuffs having a unique taste and a pleasing mouthfeel by including gas bubbles in them.

Foaming or foamed products are widely known. Examples are mousses, whipped cream, ice-cream, cappuccino foam and meringue. The properties of such products and the foam diverge widely. Important aspects are, for instance, the stability of the foam and the distribution of the foam, and the gaseous phase present therein, in the product.

One of the reasons why foam products, at least foamed products, form an increasingly important part in the food assortment is that the taste sensation and the mouthfeel of foods are considerably (and positively) influenced by the presence of bubbles. Also, adding gas bubbles to a product opens the possibility of products having a low fat content and improved sensory properties. The sensory properties can be controlled *inter alia* in the area of, at least the aspects of, creaminess, freshness, softness or airiness. What sensory property is influenced, and in what ways and to what extent, depends *inter alia* on the size and the number of bubbles. Thus, the attribute of creaminess in a mousse is more enhanced when smaller bubbles are present in not too high numbers. The attribute of airiness in mousse is more enhanced when larger bubbles are present in higher numbers. In this light, see Kilcast & Clegg in Food Quality and Preference 13 (2002), 609-623.

The stability of foam and foam-containing foods varies strongly. There are products having a more or less fixed structure, such as a mousse, as a result of which the bubbles can be retained in this product for as long as a few weeks up to months. Further, there are pourable or flowing foamed products having a foam stability in the order of seconds (soft drinks) to minutes (cappuccino foam, whipped cream, beer). To prepare foamed pourable products in which the bubbles remain present for a few weeks, as a rule small bubbles are required.

Other important aspects are the distribution of the foam-forming gas, which mostly consists of air, but can also comprise nitrous oxide, carbon dioxide gas, nitrogen gas or other food-grade gas or a mixture of the foregoing gases, and the size of the gas bubbles. For instance, there are products having very finely divided gas bubbles but also products having many relatively large bubbles.

In addition, firmness, viscosity, structure, and the like, of the matrix material, that is, the material in which the gas is at least temporarily trapped, give the food an identity of its own.

As said, the present invention concerns a method of increasing the stability of a pourable foamed product to a considerable extent, as well as foamed products having a relatively high stability. The term "stability" in this connection points to the possibility of storing the foamed product for a longer time without ongoing changes in the size of the gas bubbles present leading to undesired coarsening and/or possibly to creaming of the gas bubbles and/or other unwanted structural changes.

Foamed products or foams in general are by definition thermodynamically unstable. The three most important destabilization processes that occur are creaming, coalescence and disproportionation of the foam-forming gas bubbles. A great deal of research has already been devoted to these phenomena.

For instance, creaming - that is, the rise of light particles including bubbles in a product - of bubbles can be controlled in practice by setting a proper ratio between bubble size and product viscosity.

Coalescence of two bubbles to form one larger bubble occurs especially when the product film between two bubbles is very thin. In products in which relatively little gas is distributed, such as pourable foamed products, coalescence is mostly not a great problem.

Disproportionation, also known as Ostwald ripening, involves larger bubbles growing out at the expense of smaller bubbles. It is a result of gas diffusion between bubbles of different size, and between bubbles and the environment. As a result of the coarsening of the gas bubbles present, the appearance changes significantly and moreover the driving force towards creaming becomes greater. As a result, the stability of the foam can in fact deteriorate dramatically.

When exclusively a less well soluble gas is used in the bubbles, such as nitrogen or air, disproportionation is especially a problem with foamed products for which a storage stability of a number of days to weeks is desired. The stability of such foamed products is often (partly) realized with the rheological properties of the continuous phase. The presence of a sufficiently high yield tension or biaxial tension in the product (bulk) phase around the bubble can retard or stop disproportionation. Thus, the foam stability of mousse is co-determined by the gelatin network present. In low-viscous pourable products, the bulk rheological properties hardly, if at all, contribute to the stability against disproportionation. In this case, stability needs to be realized by the surface properties of the bubble surfaces.

In food technology, the focus has often been on firming the bubble surface by using emulsifiers with a view to delaying disproportionation. Emulsifiers alone, however, give only a relatively short stability gain of a few seconds to a minute at most.

Prolonged stabilization requires, besides the use of an emulsifier or emulsifier system, a physical or mechanical stabilization.

For instance, it is described in European patent application 0 521 543 that a stable foam having a shelf life of more than 6 weeks can be obtained with gas bubbles in it having an average diameter (D3,2; volume surface) in the range of 0.1-20 µm. To that end, a liquid aqueous medium having therein particular sugar esters (emulsifiers) is whipped until the desired dimensions are obtained.

In WO-A-00/38547, it is described that stable bubbles can be formed by using proteins that contain free cysteine groups. Cysteine groups can mutually form sulfur bridges (-S-S-bridges), thereby forming intermolecular bonds. However, without aids, forming such sulfur bridges takes much time.

United States Patent 5,925,394 describes a method for preparing an edible foam product by allowing proteins that are present in the liquid product to denature during whipping. Denaturation can be effected, for instance, by modifying the pH of the product, by heating the product or by subjecting the product to mechanical agitation. Suitable protein sources are *inter alia* milk products, egg products and meat products.

Also in the method according to EP-A-1 284 106, use is made of pH-induced denaturation. More particularly, in that European patent application, a foam is prepared from a protein-containing starting material, after which the protein in that foam is subjected to an acidification step, such that surface denaturation of that protein occurs. As protein, preferably crosslinked caseinate is used. Incidentally, in NL 1018770, the priority document of this patent application, - without further elaborations - it is suggested that the surface denaturation could also be obtained by raising the ion strength, by heating the protein, by freezing, by adding hydrogen bridge forming compounds such as urea, by a high pressure treatment, etc.

In the international patent application WO-01/39727, a storage stable, edible foam product is described, which foam contains more than 20% of water. The stability is obtained by using at least one edible, partially or completely denatured protein which stabilizes the air bubbles in the base for this product. More specifically, a base for the foam product is whipped, preferably in an oxygenless atmosphere, after which the whipped product is filled into a suitable container and subsequently subjected to a heat treatment. In this heat treatment, the proteins present reach a particular extent of denaturation, with film and bulk fixation occurring besides gelling. The heat treatment is done at a temperature above 65°C. Mentioned as edible proteins suitably used are: milk protein, and in particular whey protein and casein, egg white proteins, yeast isolate, soy protein, hemoglobin, plant protein isolate, meat protein, collagen and gelatin.

European patent application EP 0 274 348 discloses a method for the preparation of a diet product in the form of a mousse having improved organoleptic characteristics. This diet product is obtained by mixing a polysaccharide-containing base with a whipped edible foam which contains aqueous albumin, and then sterilizing this mixture. In detail, a short sterilization step of 5-15 seconds at 130-150°C is described, after which the product is cooled.

United States Patent US 5,342,635 describes a method for the preparation of blown edible foams and the thus obtained products. To that end, first of all, an amount of edible foam is formed which is placed briefly (5-30 seconds) in a microwave with a strong field, so that the foam sets and a stable structure is formed. In a preferred embodiment, this foam can comprise *inter alia* a whippable protein. Next, the structures formed by the microwave radiation heat are dried, so that a homogeneous texture and crisp, light eating quality is obtained, as for instance in the case of cereal products. The foams have a low moisture content (5-35%), which results in "pieces of foam".

The British patent publication GB 1 358 484 teaches foods with a honeycomb structure and their method of preparation. Described is a method in which an edible foam is whipped from a milk product while adding rennet, after which this mixture of foam and rennet is heated to 30-50°C for 10 minutes up to 1 hour to effect coagulation of the protein and thus to form a stable, firm structure. After this step, the mixture is cooled.

In US-A-4,718,433, EP-A-0 324 938 and EP-A-0 504 340, stable microbubbles are described whose surface is covered with proteins which after foaming are denatured on the surfaces for instance by heating.

The international patent application WO-A-01/97638 describes a moist shelf-stable foamed food in which at least one edible, partially or completely denatured protein is present which stabilizes gas bubbles through protein denaturation at the surface of the bubbles and through networking in the bulk of the product matrix. Denaturation of the proteins is realized in that, after whipping, the product is batchwise heated in a closed container. In this application, the concept of "shelf-stable" is not further specified, while moreover no mention is made of bubble sizes or any changes therein.

US 6,099,878 relates to a method for aerating and heating milk for beverages such as coffee. The foam obtained is produced by drawing air into the milk, and is further aerated and heated as it joins a steam line and progresses on to the beverage cup. The beverage plus foam is directly consumed after preparing.

The object of the present invention is to provide a new method of stabilizing a foam against disproportionation of the gas bubbles for at least a few weeks by causing a rigid surface to form on the bubbles. In other words, the stability is not primarily caused by the bulk of the product.

This objective can be attained according to the invention by a combination of protein crosslinkage on the gas bubble surfaces, followed by compression of the protein layer. More in detail, the invention concerns a method of stabilizing an edible foam, wherein a liquid, crosslinkable protein-containing food is whipped or foamed; is thereafter subjected to a step in which crosslinkable proteins present crosslink mutually; and whereafter the bubbles formed in the whipping or foaming step are subjected to a shrinking step which entails disproportionation. According to the invention, it has been found that this combination of measures results in a gas bubble stability of several weeks. The stable bubbles can already be present to a very large extent directly after preparation, which is also apparent from Example 2 below.

In this method, the starting point is a liquid food in which protein is present which is crosslinkable. As a rule, this means that the protein needs to be denaturable. Examples are crosslinkable whey proteins, chicken protein and soy protein. Suitably, this protein can be a native protein, for instance native milk protein, which crosslinks, for instance, in a denaturation step. Crosslinkage is greatly preferred to take place without necessitating the use of supplemental crosslinking agents. Incidentally, the mechanism of crosslinkage is not particularly relevant. In addition to denaturable proteins, incidentally, also non-denaturable proteins may be present in the product. Preferably, however, all proteins are denaturable.

Such a liquid medium which includes uncrosslinked protein, such as native (milk) protein, for instance skim milk, is transformed into a foam by means of a conventional whipping procedure as with a rotor-stator mixer. Incidentally, any method of forming foam can be used.

In a preferred embodiment, the step in which the crosslinkable proteins present are mutually crosslinked is a heating step in which the food is heated to above the denaturation temperature of the proteins. Thus, the foamed product is subjected to a heating which is such that at least a part of the proteins unfold and crosslink. Such a heating comprises for milk protein e.g. 4 minutes 45 seconds at 90°C, but other temperature/time combinations are also possible.

In a preferred embodiment, the shrinking step, which entails disproportionation, is carried out during a cooling step in which the temperature of the product decreases by at least 50°C with respect to the temperature at which the crosslinkage of the crosslinkable protein takes place. Incidentally, the product should not freeze in this step. During the storage of such a foam, disproportionation occurs, whereby larger bubbles grow while smaller bubbles shrink. Surprisingly, it has been found that after about 12-24 hours' storage, no further shrinkage of the smaller bubbles occurs. While in a product without the protein crosslinkage according to the invention the smaller bubbles have gone after 1 day's storage, the smaller bubbles shrink in a heated product, after which the shrinking process stops and the bubbles remain stable for several weeks. It is supposed that as a result of the shrinkage of the bubble, the crosslinked protein layer on the bubble surface becomes denser and hence, apparently, very rigid. The bubbles formed in this way have an average diameter in the order of 10-50 µm. This size, incidentally, depends *inter alia* on the foam forming method used. In addition, also the extent of protein crosslinkage is co-determinative of the eventual size of the stable bubbles.

The shrinking step that leads to the reduced, stabilized gas bubbles according to the invention can be carried out and/or be speeded up by subjecting the bubbles, directly after foaming and heating, to an accelerated shrinking process, for instance through a pressure increase from reduced pressure to atmospheric pressure, or from atmospheric or increased pressure to a still higher pressure. Alternatively, use can be made of the solubility of gases. The gas solubility of well soluble gases such as carbon dioxide, and nitrous oxide, is several times higher at high temperature than at low temperature. When a product is whipped and heated at a higher temperature and subsequently cooled fast, what happens during and after the cooling is that a part of the gas goes into solution from the bubbles, resulting in shrink of the bubbles.

Another method of producing described stable bubbles is by means of direct injection of a mixture of steam and a non-condensing gas into the product. By introducing this mixture, in effect a heating and shrinking step are combined. The steam heats the product, while through condensation of the steam the shrinking step is carried out. The temperature rise here results in denaturation of the proteins, while the condensation of the steam results in the needed shrink of the gas bubbles. The presence of non-condensing gas in the gas-steam mixture guarantees that bubbles are left in the product after condensation of the steam. Preferably, the gas in the steam-gas mixture is nitrogen gas; also with air, good results are obtained. Of course, other food-grade non-condensing gases can be used.

Crosslinkage of proteins can also be realized in a different way, for instance enzymatically through addition of the enzyme transglutaminase, or through cold gelling of (whey) proteins, whereby a cold-induced gelling occurs when preheated whey protein is cooled.

Gas bubbles which, despite the measures taken, have yet become coarser, can be, and preferably are, separated from the product. In part, this is an automatically occurring phenomenon, but it can be accelerated by vibration, centrifugation or evacuation.

The formation of stable bubbles is promoted according as more proteins with free cysteine groups are present.

Incidentally, preferred methods and apparatuses to be used in the method according to claim 1 below are described in detail in the Dutch patent applications that were filed on the same day as the present one: NL 1024434, NL 1024433 and NL 1024438. The methods and apparatuses described therein are incorporated by reference in this description as preferred embodiments of the present method.

The procedures described can be carried out in line with conventional equipment in the factory. This in contrast with the above-mentioned method in WO 01/97638 A1 in which a batch heating is used. Moreover, the method can be used, without problems, to stabilize against disproportionation all dairy products, but also other protein-stabilized foamed foods, in a relatively simple manner, without addition of emulsifiers or stabilizers.

The method according to the invention requires the presence of 0.2 to 20 wt.% of protein based on the weight of the product to be foamed. Preferably, between 0.35 and 7 wt.% of protein is used; most preferably 1-5 wt.%. In addition, sweeteners, salts, vitamins, minerals, aroma agents, colorings, flavorings and stabilizers, preferably stabilizing thickeners such as carrageen, xanthan, guar gum or carboxymethylcellulose, can be included in the product. Emulsifiers may also be present, though only as long as they do not keep the protein away from the bubble surface. Fat globules may be present in the product in quantities that do not adversely affect the stability of the foam.

In a second aspect, the invention concerns a stable, bubble-containing product, obtainable according to the method of the invention.

The foam according to the invention is typically pourable. "Pourable" implies that the product has a low bulk viscosity and elasticity. In these products, disproportionation plays a major role. Examples of this kind of products range from milk, drinking chocolate to thicker products such as vla and milkshake. Upon tilting a container such as a small pot or a bottle in which the foam is contained, the foam will flow out of that container. The rate of disproportionation of gas bubbles in a product depends on the bulk viscosity and the bulk elasticity of the product, in which connection reference is made to the article "Effect of bulk and interfacial rheological properties on bubble dissolution", by W. Kloek et al. in J. Coll. Int. Sci. 237 (2001), 158-166.

The average bubble size in the foam according to the invention can be determined with microscopic techniques, as follows also from the Figures and the Examples. Typically, the bubbles will have a largest diameter in the range between 1 and 100 µm; preferably between 5 and 50 µm and most preferably between 10 and 30 µm.

The overrun of the product, defined as the volume of the product after whipping or foaming divided by the volume of the product before whipping or foaming, times 100%, is typically between 0.5 and 100%, preferably between 0.7 and 50%, suitably between 0.8 and 20%, while the best stabilities are obtained between 1 and 15%. Specifically, an overrun around 5% gives a fine stable product.

The product according to the invention can be used as an ingredient or constituent of foods such as dairy products and fruit juices. Such application gives the food enriched with the product according to the invention a number of advantageous properties. Thus, it can serve as a fat substitute; it makes the food taste creamier and leads to a softer mouthfeel. Also, it is possible to accelerate the whipping process upon addition to a whipping cream or other product to be whipped, such as a topping, cream base or the like.

The advantageous properties mentioned occur when the product according to the invention is added in amounts up to typically approximately 20 vol. %, depending, incidentally, on the taste effects and functional properties to be set, without unduly affecting the desired properties of the product to which the product according to the invention is being added.

The invention will presently be further elaborated in and by the following non-limiting examples. Percentages are percentages by weight based on the weight of the finished product, unless specified otherwise.

### Example 1

Skim milk with 0.7% xanthan was whipped, using a Mondomix, to an overrun of 20% and then, while flowing, heated for 285 s at 90°C. While the bubble size distribution for an unheated and a heated foam were comparable directly after preparation, small stable bubbles remained visible in the heated product after 1 day's storage: in the unheated product, these were absent after 1 day. These small bubbles, which were first present upon a few hours' storage, moreover proved stable for at least 4 weeks' storage at refrigerator temperature (7°C).

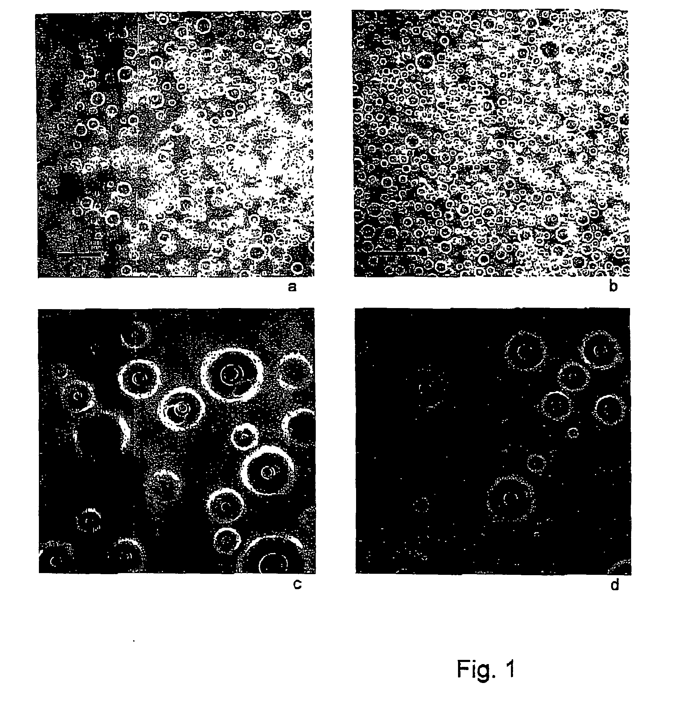

This effect is shown in Fig. 1. Specifically, Fig. 1 shows microscope recordings of the bubble size distribution in foamed skim milk (overrun 20%); (a) unheated, fresh, (b) heated, fresh, (c) unheated, after 1 week, (d) heated, after 1 week.

### Example 2

A whey protein solution (3.5% protein) with 0.1% κ-carrageen was whipped using a mixture of steam and nitrogen in a direct steam injection device (Alfa-Laval Sterilab; (holder pressure 2 bars, holder temperature 120°C). Next, the bubbles were further reduced in an in-line turrax (IKA Lab in-line Turrax, power density ± 10⁷ W/m²; 10,000 rpm). This involved large bubbles being broken up to form small bubbles. The number of stable small bubbles was roughly doubled. The initial overrun of the product was about 20%. Through creaming of the larger bubbles, the result within a few hours is about 3% overrun of small stable bubbles which are stable for at least two weeks. The size of the stable bubbles did not change measurably.

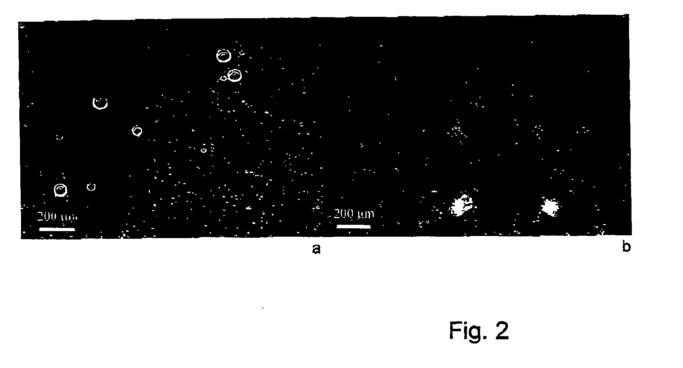

Fig. 2 shows the bubble size distribution in foamed whey protein solution (overrun 3%); (a) fresh, (b) after 1 day. This shows that the stable bubbles are already present directly after production.

## Claims

1. A method for stabilizing an edible foam, wherein a liquid, crosslinkable protein-containing food is whipped or foamed; is thereafter subjected to a step in which crosslinkable proteins present crosslink mutually; and whereafter the bubbles formed in the whipping or foaming step are subjected to a shrinking step which entails disproportionation.

2. A method according to claim 1, wherein the food comprises native denaturable protein, preferably native milk protein.

3. A method according to claim 1 or 2, wherein the step in which the crosslinkable proteins present are mutually crosslinked is a heating step in which the food is heated to above the denaturation temperature of the proteins.

4. A method according to any one of the preceding claims, wherein the heating step and the shrinking step are combined by injecting a mixture of steam and a non-condensable gas into the product and allowing the steam to condense in the product.

5. A method according to claim 4, wherein the non-condensable gas is nitrogen or air.

6. A method according to any one of claims 1-5, wherein the shrinking step takes place during a cooling step in which the temperature of the product decreases by at least 50°C with respect to the temperature at which the crosslinking of the crosslinkable protein takes place.

7. A method according to any one of the preceding claims, wherein large bubbles are separated.

8. A method according to any one of the preceding claims which is carried out in-line and/or continuously in combination with and preferably following the method in which the liquid, protein-containing food is prepared.

9. A stable, bubble-containing product obtainable according to the method according to any one of the preceding claims.

10. A food comprising the product according to claim 9.

## Patentansprüche

1. Ein Verfahren zum Stabilisieren eines essbaren Schaumes, worin ein flüssiges vernetzbares Protein enthaltendes Nahrungsmittel schaumig geschlagen oder geschäumt wird; danach vorhandene vernetzbare Proteine miteinander vernetzt werden und wonach die in dem Schritt des Schaumigschlagens oder des Schäumens gebildeten Blasen einem Verfahrensschritt des Schrumpfens unterworfen werden, welcher zu einer Disproportionierung führt.

2. Ein Verfahren nach Anspruch 1 , worin das Nahrungsmittel native denaturierbare Proteine, vorzugsweise native Milchproteine, umfasst.

3. Ein Verfahren nach Anspruch 1 oder 2, in welchem der Verfahrensschritt, in welchem die vorhandenen vernetzbaren Proteine miteinander vernetzt werden, ein Erwärmungsschritt ist, in welchem das Nahrungsmittel auf eine Temperatur oberhalb der Denaturierungstemperatur der Proteine erwärmt wird.

4. Ein Verfahren nach einem der vorherigen Ansprüche, worin der Verfahrensschritt des Erwärmens und der Verfahrensschritt des Schrumpfens miteinander verbunden werden durch Injizieren einer Mischung aus Dampf und eines nicht-kondensierbaren Gases in das Produkt und Erlauben des Dampfes, in dem Produkt zu kondensieren.

5. Ein Verfahren nach Anspruch 4, worin das nicht-kondensierbare Gas Stickstoff oder Luft ist.

6. Ein Verfahren nach einem der Ansprüche 1 bis 5, worin der Verfahrensschritt des Schrumpfens stattfindet während einem Kühlungsschritt, in welchem die Temperatur des Produktes um mindestens 50 °C erniedrigt wird in Bezug auf die Temperatur, bei welcher die Vernetzung der vernetzbaren Proteine stattfindet.

7. Ein Verfahren nach einem der vorherigen Ansprüche, worin große Blasen abgetrennt werden.

8. Ein Verfahren nach einem der vorherigen Ansprüche, welches durchgeführt wird in Reihe und/oder kontinuierlich in Kombination mit und vorzugsweise nach dem Verfahren, in welchem das flüssige Protein enthaltende Nahrungsmittel hergestellt wird.

9. Ein stabiles, Blasen enthaltendes Produkt, erhältlich nach dem Verfahren gemäß einem der vorherigen Ansprüche.

10. Ein Nahrungsmittel, umfassend das Produkt nach Anspruch 9.

## Revendications

1. Procédé de stabilisation d'une mousse comestible, dans lequel un aliment liquide contenant des protéines réticulables est battu ou fouetté ; est ensuite soumis à une étape dans laquelle les protéines réticulables présentes se réticulent mutuellement ; et ensuite les bulles formées au cours de l'étape de battage ou de fouettage sont soumises à une étape de rétraction qui entraîne un disproportionnement.

2. Procédé selon la revendication 1, dans lequel l'aliment comprend une protéine naturelle dénaturable, de préférence une protéine de lait naturelle.

3. Procédé selon la revendication 1 ou 2, dans lequel l'étape dans laquelle les protéines réticulables présentes sont réticulées mutuellement est une étape de chauffage dans laquelle l'aliment est chauffé à une température supérieure à la température de dénaturation des protéines.

4. Procédé selon l'une quelconque des revendications précédentes, dans lequel l'étape de chauffage et l'étape de rétraction sont combinées par injection d'un mélange de vapeur d'eau et d'un gaz non condensable dans le produit et en permettant à la vapeur d'eau de se condenser dans le produit.

5. Procédé selon la revendication 4, dans lequel le gaz non condensable est de l'azote ou de l'air.

6. Procédé selon l'une quelconque des revendications 1 à 5, dans lequel l'étape de rétraction se fait pendant une étape de refroidissement dans laquelle la température du produit diminue d'au moins 50 °C par rapport à la température à laquelle la réticulation de la protéine réticulable se produit.

7. Procédé selon l'une quelconque des revendications précédentes, dans lequel de grosses bulles sont séparées.

8. Procédé selon l'une quelconque des revendications précédentes, qui est effectué en ligne et/ou en continu en combinaison avec et de préférence à la suite du procédé dans lequel est préparé l'aliment liquide contenant des protéines.

9. Produit stable contenant des bulles qui peut être obtenu selon le procédé de l'une quelconque des revendications précédentes.

10. Aliment comprenant le produit selon la revendication 9.
